(19) Europäisches Patentamt
European Patent Office
Office européen des brevets

(11) Publication number: **0 471 409 A1**

(12) **EUROPEAN PATENT APPLICATION**

(21) Application number: **91202035.1**

(22) Date of filing: **07.08.91**

(51) Int. Cl.5: **C09D 5/03**, C08K 5/20, C09D 177/12

(30) Priority: **13.08.90 NL 9001808**

(43) Date of publication of application: **19.02.92 Bulletin 92/08**

(84) Designated Contracting States: **AT BE CH DE DK ES FR GB GR IT LI NL SE**

(71) Applicant: **DSM N.V.**
**Het Overloon 1**
**NL-6411 TE Heerlen(NL)**

(72) Inventor: **Schippers, Jan**
**Vordensebeek 12**
**NL-8033 DE Zwolle(NL)**
Inventor: **Binda, Paul Herman Guillaume**
**Meppelerdiep 5**
**NL-8032 TB Zwolle(NL)**
Inventor: **van de Werff, Adrianus Johannes**
**Spiekerbrink 7**
**NL-8034 RA Zwolle(NL)**

(74) Representative: **den Hartog, Jeroen Hendrikus Joseph et al**
**Octrooibureau DSM Postbus 9**
**NL-6160 MA Geleen(NL)**

(54) **Powder coating.**

(57) The invention relates to a powder coating comprising a polymer with one or more free carboxylic acid groups and a compound containing one or more $\beta$-hydroxyalkylamide groups, the composition being substantially or completely free of benzoin and containings agent, a crystalline wax, having a melting point in the range of 100 to 160 °C, a viscosity, measured 10 °C above the melting point, of less than 50 mPas and a low surface tension.

The invention also relates to the use of a crystalline wax having a melting point between 100 and 160 °C, a viscosity, measured 10 °C above the melting point, of less than 50 mPas and containing an amide bond and a fatty acid group, as degassing agent in powder coatings.



Rank Xerox (UK) Business Services

The present invention relates to a powder coating comprising a polymer with free carboxylic acid groups and a compound containing β-hydroxyalkylamide groups.

Such a composition is known from US-A-4801680. The disclosed composition is cured, after applying it onto a substrate, by heating the powder to 160-200 °C, which causes the powder to melt and form a smooth layer. The top layer, or coating, is chemically crosslinked at that temperature by an esterification reaction of the acid groups of the polymer and the hydroxy groups of the compound containing β-hydroxyalkylamide groups. A degassing agent, namely benzoin, is included in the composition disclosed by US-A-4801680. A degassing agent must be included in the composition to expel the air or gas bubbles which became entrapped in the coating as the powder melts during the curing cycle. If gas bubbles were allowed to remain in the coating, the adhesion and protective effect of the coating would be impaired.

The composition described in US-A-4801680 has the disadvantage that it cannot be used in a white or transparent coating. As discussed in the 'Conference proceedings of the 16th International Conference on Organic Science and Technology' (Athens, 1990), in the article on pp. 235-249 entitled 'New perspectives on hydroxyamide crosslinkers' by A. Mercurio, the powder coating becomes light brown in color upon curing, so that a white or clear coating cannot be obtained. The brown coloration appears to intensify if the cured powder coating is heated at a temperature of 200 °C for a longer time, such as for example 1 hour. The intensification in color with longer curing times ('yellowing on overbake') is also a major drawback.

The disadvantageous brown coloration of the composition disclosed by US-A-4,801,680 is due to the presence of benzoin in the composition.

The present invention provides a solution to this problem by providing a powder coating composition which contains a degassing agent that does not have the detrimental effect of benzoin on the color of the coating.

The powder coating according to the present invention comprising a polymer with one or more free carboxylic acid groups and a compound containing one or more β-hydroxyalkylamide groups is characterized in that the composition is substantially or completely free of benzoin and contains as a degassing agent a crystalline wax, having a melting point in the range of 100 to 160 °C, a viscosity, measured at 10 °C above the melting point, of less than 50 mPas and a low surface tension.

Since 1975, benzoin has virtually always been used as a degassing agent in all types of powder coatings. As noted above, compositions containing benzoin are disadvantageous in that the benzoin causes the powder coating to become light brown in color upon curing, so that a white or clear coating cannot be obtained. It has now been found that a crystalline wax having a melting point in the range of 100 to 160 °C, a viscosity, measured at 10 °C above the melting point, of less than 50 mPas and a low surface tension strongly promotes degassing without a detrimental effect on color. Thus, benzoin is not included in the powder coating of the present invention.

The crystalline wax is preferably a wax containing at least a saturated fatty acid chain. Preferably, the wax contains an amide bond as well. In order to have a low viscosity just above the melting point, it is advantageous if the wax has a molecular weight lower than 1000, in particular lower than 750.

The present invention also relates to a substrate coated with and articles formed by the mixture of a polymer with one or more free carboxylic acid groups, a compound containing one or more β-hydroxyalkylamide groups and, as a degassing agent, the crystalline wax. The crystalline wax has a melting point in the range of 100 to 160 °C, and a viscosity, measured at 10 °C above the melting point, of less than 50 mPas.

The viscosity is preferably less than 25 mPas, measured at 10 °C above the melting point, and the melting point is preferably between 120-150 °C. The wax preferably contains at least a fatty acid group, and preferably, the wax contains an amide bond as well. The fatty acid group is preferably saturated.

The crystalline wax can be the diamide of a diamino alkane and a saturated fatty acid. The diamino alkane preferably has 2-24 carbon atoms and most preferably has 2-12 carbon atoms. Examples of diamino alkanes which can be used include ethylene diamine, 1,2-diamino propane, 1,4-diamino butane and 1,4-diamino cyclohexane. As the fatty acid a saturated fatty acid such as saturated fatty acids having 12-24 carbon atoms is used preferably. Stearic acid is very suitable however other acids such as myristic acid, lauric acid or palmitic acid may also be used.

It is believed to be important that the surface tension of the wax in molten condition be low. A suitable low surface tension can be determined by moulding some wax into a pill, putting the pill on a tray and then heating the tray until the wax melts. If the wax rapidly forms a very thin layer, i.e. a thin film, the wax is suitable.

The wax is generally used in an amount of 0.2-5.0 wt.% relative to the polymer. Preferably, 0.7-3.0 wt.% is used.

An example of a suitable wax is Microwax C™ from Hoechst. According to the manufacturer's

specifications, the melting point of the wax is 141 °C and the viscosity at 150 °C is 15 mPas. The surface tension of this wax is 31 dyne/cm (measured with contactangle determination and Neumann-Sell diagram 143 °C) Microwax C™ is the distearyl amide of ethylene diamine.

As discussed above the resin composition for the powder coating comprises in addition to the wax a polymer with one or more free carboxylic acid groups and a compound containing one or more β-hydroxyalkylamide groups.

Representative examples of the compound containing β-hydroxyalkylamide groups have the following structure as shown in formula (1):

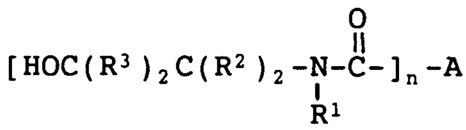 (1)

where A is mono- or polyvalent organic group derived from a saturated or unsaturated alkyl group with 1-60 carbon atoms (for instance ethyl, methyl, propyl, butyl, pentyl, hexyl, heptyl, octyl, nonyl, decyl, cicosyl, tricontyl, tetracontyl, pentacontyl, hexacontyl and the like); an aryl group, for instance a mononuclear or binuclear aryl group, such as phenyl, naphthyl and the like; a trialkylene amino group, with 1-4 carbon atoms per alkenyl group, for instance trimethylene amino, triethylene amino and the like; or an unsaturated residue with one or more alkenic groups (-C=C-), such as ethenyl, 1-methylethenyl, 3-butenyl-1,3-diyl, 2-propenyl-1,2-diyl, a carboxyalkenyl group with (1-4) carbon atoms per alkenyl group, for instance 3-carboxy 2-propenyl group and the like, a alkoxycarbonyl alkenyl group with (1-4) carbon atoms per alkenyl group, such as 3-methoxycarbonyl-2-propenyl group and the like;

$R^1$ is hydrogen, an alkyl group with 1-5 carbon atoms (for instance methyl, ethyl, n-propyl, n-butyl, sec.butyl, tert.butyl, pentyl and the like) or a hydroxyalkyl group with 1-5 carbon atoms (for instance hydroxyethyl, 3-hydroxypropyl, 2-hydroxypropyl, 4-hydroxybutyl, 3-hydroxybutyl, 2-hydroxy 2-methylpropyl, 5-hydroxypentyl, 4-hydroxypentyl, 3-hydroxypentyl, 2-hydroxypentyl and the hydroxyl derivatives of the pentyl isomers);

$R^2$ and $R^3$ can be the same or different and are hydrogen or a branched or unbranched alkyl group with 1-5 carbon atoms, while one of the $R^2$ groups and one of the $R^3$ groups may also form a cycloalkyl group, for instance cyclopentyl, cyclohexyl and the like, with the adjacent carbon atoms;

n is the number 1-4, preferably 1 or 2.

The preferred compounds are those having the structure shown in formula (2)

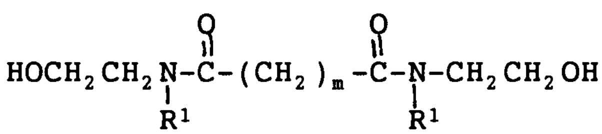 (2)

where $R^1$ has the meaning defined above and m has a value of 1-8. These compounds are preferred because they react quickly with carboxyl groups and also because the crosslinked coatings prepared with these compounds have good weathering resistance. Moreover, the required starting materials are readily available.

Especially preferred compounds are those in which $R^1$ represents a hydroxyethyl group and m has a value of 2-8.

The compounds of formulas (1) and (2) are known compounds and can be prepared as described for instance in GB-A-1489485, US-A-4076917, US-A-4115637 and US-A-4101606. It can be observed that the compound containing β-hydroxyalkyl groups is often a mixture of, for instance a substantially tetrafunctional compound, as well as higher and lower functional compounds, so that the average functionality need not be a whole number.

The compound containing β-hydroxyalkylamide groups according to formula (2) preferably has a melting point between 60 and 150 °C and an average functionality between 2.5 and 4.3, in particular between 2.8 and 4.1.

In order to obtain a thermosetting composition, the β-hydroxyalkylamide groups containing compound of formula (1) or a polymer thereof is mixed with the polymer containing one or more free carboxylic acid groups at a ratio of about 0.5-2 hydroxyl function equivalents per carboxyl function equivalent. A ratio of

about 1:1 carboxyl to hydroxyl function equivalents is preferred. Ratios outside these ranges can be used however they diminish the efficacy of the crosslinking.

In one embodiment a compound of formula (2) is used with - about 4 β-hydroxyalkylamide groups (commercially available under the brand name Primid XL 552 from Rohm & Haas). The weight ratio between the polymer with free acid groups and the compound containing β-hydroxyalkylamide groups is usually 75-97 parts by weight polymer and 3-25 parts by weight crosslinking agent.

According to the present invention, any polymer which contains carboxyl groups can be used. Preferably, polyesters or polyacrylates are used. The acid number of the polymer is preferably between 15 and 150, in particular between 20 and 70. The glass transition temperature is preferably 30-80 °C, in particular 35-65 °C. The viscosity at 165 °C (Emila, D = 17.6 $s^{-1}$) is preferably 100-1000 dPas, in particular 100-800.

Examples of preferred monomers for polyacrylates that can be taken up in the main chain of the polymer and crosslinked with the β-hydroxyalkylamides of formula (1) are unsaturated monocarboxylic acids such as acrylic acid, methacrylic acid, crotonic acid and the like, unsaturated dicarboxylic acids, such as maleic acid, 2-methyl maleic acid, itaconic acid, 2-methyl itaconic acid, α,β-methylene glutaric acid and the like, unsaturated anhydrides, such as maleic anhydride, itaconic anhydride, acrylic anhydride, methacrylic anhydride and the like. The polyacrylate further consists of the customarily copolymerized esters of (meth)acrylic acid, such as for instance methylmethacrylate; butylacrylate; 2-ethylhexylacrylate or acrylonitrile, styrene and other ethylenically unsaturated compounds.

Self-crosslinking polymers can be obtained for instance by polymerisation of compounds containing unsaturated β-hydroxylamide groups together with components containing free acid groups.

Suitable polyesters can be obtained using the customary methods of preparation from substantially aromatic polycarboxylic acids, such as phthalic acid, isophthalic acid, terephthalic acid, pyromellitic acid, trimellitic acid, 3,6-dichlorophthalic acid, tetrachlorophthalic acid or, in so far as they are available, the anhydrides, acid chlorides or lower alkyl esters thereof. Mostly the carboxylic acid component consists of at least 50 mol %, preferably at least 70 mol %, isophthalic acid and/or terephthalic acid.

In addition, aliphatic diols can be used. Examples of suitable aliphatic diols include ethylene glycol, propane-1,2-diol, propane-1,3-diol, butane-1,2-diol, butane-1,4-diol, butane-1,3-diol, 2,2-dimethylpropanediol-1,3 (i.e. neopentyl glycol), hexane-2,5-diol, hexane-1,6-diol, 2,2-[bis-(4-hydroxycyclohexyl)]propane, 1,4-dimethylolcyclohexane, diethylene glycol, dipropylene glycol and 2,2-bis-[4-(2-hydroxy)]phenylpropane and minor quantities of polyols, such as glycerol, hexanetriol, pentaeryltritol, sorbitol, trimethyolethane, trimethylolpropane and tris(2-hydroxy)isocyanurate, can be used. Also, epoxy compounds can be used instead of diols or polyols. Preferably, the alcohol component contains at least 50 mol % neopentyl glycol and/or propylene glycol.

Polycarboxylic acids that can be used in combination therewith are cycloaliphatic and/or acyclic polycarboxylic acids, such as for instance tetrahydrophthalic acid, hexahydroendomethyleneterephthalic acid, hexachlorotetrahydrophthalic acid, azelaic acid, sebacic acid, decanedicarboxylic acid, dimer fatty acid, adipic acid, succinic acid, maleic acid, in quantities up to at most 30 mol %, preferably at most 20 mol % relative to the total of carboxylic acids. Hydroxycarboxylic acid and/or, if desired, lactones can also be used, for instance 12-hydroxystearic acid, epsilon caprolactone, hydroxypivalic acid ester of neopentyl glycol. In minor quantities, monocarboxylic acids, such as benzoic acid, tertiary butylbenzoic acid, hexahydrobenzoic acid and saturated aliphatic monocarboxylic acids, can also be added to the preparation.

The polyesters are prepared by esterification or transesterification, according to methods known in the art. If desired, the polyesters are prepared in the presence of customary catalysts which include for instance, dibutyl tin oxide or tetrabutyl titanate, with a correct choice of the preparation conditions and the COOH/OH ratio, the end products have an acid number between 15 and 150.

If desired, the powder coating may contain mixtures of polyesters and polyacrylates, such as for instance these described in EP-A-322827, US-A-4727111 and US 4788255. If desired, another resin may also be included in the application, such as for instance an epoxy resin as described in EP-A-322807.

Obviously, all customary additives may be included into the coating composition. Examples of customary additives include pigments, fillers, flow agents, stabilizers and catalysts. Suitable pigments include inorganic pigments, for instance titanium oxide, zinc sulphide, iron oxide and chromium oxide, and organic pigments, for instance azo compounds. Suitable fillers include metal oxides, silicates, carbonates and sulphates.

The present compositions comprising polymers with one or more free carboxylic acid groups and compounds containing one or more β-hydroxyalkylamide groups can be used as coating substances, for instance for general purpose industrial coatings and for coatings on machines and equipment. The present compositions are especially suitable for use as metal coatings, for instance for cans, domestic and other

small appliances, motorvehicles and the like.

The invention will now be elucidated by means of the following, non-restrictive examples.

Examples I-III and Comparative Experiment A

To 557 parts by weight resin (URALAC P 2400TM from DSM Resins B.V., Netherlands), which primarily comprises terephthalic acid, isophthalic acid and neopentyl glycol, is slightly branched, has an acid number of 36 and a viscosity at 165°C (Emila, D = 17.6 $S^{-1}$) of 620 dPas, was added 31 parts by weight β-hydroxyalkyl groups containing compound (Primid XL 552TM from Rohm & Haas), a substantially tetrafunctional β-hydroxyethyldiamide derivative of adipic acid, 400 parts by weight titanium dioxide and 9 parts flowagent Modaflow (of Monsanto), was added 5 parts by weight (Example I), 10 parts by weight (Example II) and 15 parts by weight (Example III) Microwax-CTM (from Hoechst), a distearylamide of ethylenediamide, and 5 parts by weight benzoin in Comparative Experiment A.

The powder coatings were prepared by extruding the mixtures and grinding them to a powder. Bonder steel plates were then coated with the powder. Curing was effected at 200°C (10 minutes). The impact resistance (determined according to ASTM-D-2794) obtained was good in all cases (160 inch pound).

The yellowing of the plates was measured with a Dr. Lange microcolour (DIN 5033 and DIN 6167) using a reference plate as prescribed. The thickness of the coating was 55 ± 5 micron.

TABLE 1

| Time | Yellowing (delta b) | | | |
|---|---|---|---|---|
| at 200°C | Ex. I | Ex. II | Ex. III | Comp. Exp. A |
| 10 min. | 0.5 | 1.2 | 1.2 | 4.2 |
| 1 h | 0.7 | 2.7 | 2.9 | 5.1 |

Examples IV-VI and Comparative Experiments B and C

Several clear coats were from Uralac P 4800TM with an acid number of 26, a viscosity of 550 dPas and a Tg of 60°C. The starting materials are shown in Table 2 below.

TABLE 2

| | Ex. IV | Ex. V | Ex. VI | Comp. B | Comp. C |
|---|---|---|---|---|---|
| Uralac P 4800 | 575 | 575 | 575 | 575 | 575 |
| Primid XL 552 | 25 | 25 | 25 | 25 | 25 |
| Byk 361* | 5 | 5 | 5 | 5 | 5 |
| Microwax C | 5 | 10 | 15 | - | - |
| Benzoin | - | - | - | 4.5 | - |

* flow agent

Small steel plates were coated with the powder coatings obtained, and cured. Care was taken to ensure that the coat thickness on each plate was between 50 and 120 microns. Next, the presence of entrapped bubbles was determined using an optical microscope. The color was determined visually.

TABLE 3

| | Ex. IV | Ex. V | Ex. VI | Comp. B | Comp. C |
|---|---|---|---|---|---|
| Bubbles in coat thickness ($\mu$) | > 80 | > 100 | > 105 | > 35* | > 70 |
| Color | clear | clear | clear | yellow | clear |

* very small bubbles

The above tests show that Microwax C™ contributes to degassing of the molten powder coating, while having no effect on the color of the coating. The improvement in gas free coat thickness from 70 to 100 microns which occurs in this example is very significant, since in practice the aim will be to obtain coat thicknesses of 50-70 microns, but it is virtually impossible to avoid local coat thicknesses of up to 100 microns on coated objects.

The required quantity of crystalline wax according to the invention will, to a slight degree, depend on the resin system used and can be determined by one of ordinary skill in the art.

**Claims**

1. A powder coating comprising a polymer with one or more free carboxylic acid groups and a compound containing one or more $\beta$-hydroxyalkylamide groups, characterized in that the composition is substantially or completely free of benzoin and contains as a degassing agent a crystalline wax having a melting point in the range of 100 to 160°C, a viscosity, measured at 10°C above the melting point, of less than 50 mPas and a low surface tension.

2. A powder coating comprising a polymer with one or more free carboxylic acid groups and a compound containing one or more $\beta$-hydroxyalkylamide groups, characterized in that the composition is substantially or completely free of benzoin and contains a crystalline wax having a molecular weight of less than 1000 dalton and a melting point in the range of 100 to 160°C, wherein the wax contains an amide bond and a fatty acid group.

3. A powder coating according to any one of the claims 1-2, characterized in that the polymer with one or more free carboxylic acid groups is a polyester, a polyacrylate or a mixture thereof.

4. A powder coating according to any one of the claims 1-3, characterized in that the polymer with one or more free carboxylic acid groups has an acid number between 15 and 150.

5. A powder coating according to any one of the claims 1-4, characterized in that the compound containing one or more $\beta$-hydroxyalkylamide groups is a compound of formula (2)

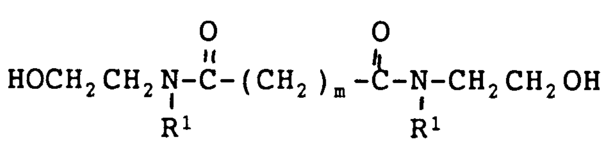

(2)

where $R^1$ represents a hydroxyethyl group and m has a value of 2-8.

6. A powder coating according to any one of the claims 1-5, characterized in that the wax has a molecular weight of less than 1000 daltons, and contains an amide bond and a fatty acid group.

**7.** Use of a crystalline wax having a melting point in the range of 100 to 160 °C, a viscosity measured at 10 °C above the melting point, of less than 50 mPas and containing an amide bond and a fatty acid group, as degassing agent in powder coatings.

**8.** A substrate coated with a powder coating comprising a polymer with one or more free carboxylic acid groups, a compound containing one or more β-hydroxyalkylamide groups, and as a degassing agent, a crystalline wax having a melting point in the range of 100 to 160 °C, and a viscosity, measured at 10 °C above the melting point, of less than 50 mPas and containing an amide bond and a fatty acid group.

**9.** A method of coating a substrate by using a powder coating comprising a polymer with one or more free carboxylic acid groups and a compound containing one or mre β-hydroxyalkylamide groups, and incorporating therein, as a degassing agent, a crystalline wax, wherein the wax has a melting point in the range of 100 to 160 °C, a viscosity, measured at 10 °C above the melting point, of less than 50 mPas and a low surface tension.

**Claims for the following Contracting State: ES**

**1.** A process for preparing a powder coating by mixing a polymer with one or more free carboxylic acid groups and a compound containing one or more β-hydroxyalkylamide groups, characterized in that the composition is substantially or completely free of benzoin and contains as a degassing agent a crystalline wax having a melting point in the range of 100 to 160 °C, a viscosity, measured at 10 °C above the melting point, of less than 50 mPas and a low surface tension.

**2.** A process for preparing a powder coating comprising a polymer with one or more free carboxylic acid groups and a compound containing one or more β-hydroxyalkylamide groups, characterized in that the composition is substantially or completely free of benzoin and contains a crystalline wax having a molecular weight of less than 1000 dalton and a melting point in the range of 100 to 160 °C, wherein the wax contains an amide bond and a fatty acid group.

**3.** A process for preparing a powder coating according to any one of the claims 1-2, characterized in that the polymer with one or more free carboxylic acid groups is a polyester, a polyacrylate or a mixture thereof.

**4.** A process for preparing a powder coating according to any one of the claims 1-3, characterized in that the polymer with one or more free carboxylic acid groups has an acid number between 15 and 150.

**5.** A process for preparing a powder coating according to any one of the claims 1-4, characterized in that the compound containing one or more β-hydroxyalkylamide groups is a compound of formula (2)

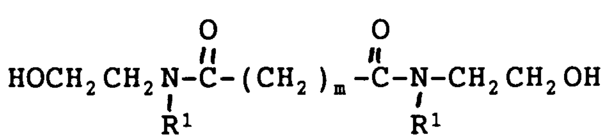

(2)

where $R^1$ represents a hydroxyethyl group and m has a value of 2-8.

**6.** A process for preparing a powder coating according to any one of the claims 1-5, characterized in that the wax has a molecular weight of less than 1000 daltons, and contains an amide bond and a fatty acid group.

**7.** Use of a crystalline wax having a melting point in the range of 100 to 160 °C, a viscosity measured at 10 °C above the melting point, of less than 50 mPas and containing an amide bond and a fatty acid group, as degassing agent in powder coatings.

**8.** A substrate coated with a powder coating prepared by mixing a polymer with one or more free carboxylic acid groups, a compound containing one or more β-hydroxyalkylamide groups, and as a degassing agent, a crystalline wax having a melting point in the range of 100 to 160 °C, and a viscosity,

measured at 10 ° C above the melting point, of less than 50 mPas and containing an amide bond and a fatty acid group.

**9.** A method of coating a substrate by using a powder coating comprising a polymer with one or more free carboxylic acid groups and a compound containing one or mre $\beta$-hydroxyalkylamide groups, and incorporating therein, as a degassing agent, a crystalline wax, wherein the wax has a melting point in the range of 100 to 160 ° C, a viscosity, measured at 10 ° C above the melting point, of less than 50 mPas and a low surface tension.

European Patent Office

# EUROPEAN SEARCH REPORT

Application Number

**EP 91 20 2035**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 322 834 (PPG INDUSTRIES)<br>* page 3, line 45 - line 50 * * * page 5, line 5 - line 8; claims 1-5 * * | 1,3-5 | C 09 D 5/03<br>C 08 K 5/20<br>C 09 D 177/12 |
| Y | US-A-3 872 040 (K.L.MOLLOHAN)<br>* column 1, line 58 - line 65 * * * column 4, line 38 - line 43; claims 1,9,14 * * | 1,3-5 | |
| A | FR-A-2 235 988 (AQUITAINE TOTAL ORGANICO)<br>* claims 1-3 * * | 1 | |
| A | FR-A-2 292 022 (CHEMISCHE WERKE HULS)<br>* claims 1-3 * * | 1 | |

TECHNICAL FIELDS SEARCHED (Int. Cl.5)

C 09 D

The present search report has been drawn up for all claims

| Place of search | Date of completion of search | Examiner |
|---|---|---|
| The Hague | 22 November 91 | BUSCAGLIONE Y. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document